# EUROPÄISCHE PATENTSCHRIFT

(11) **EP 1 731 382 B1**
(45) Veröffentlichungstag und Bekanntmachung des Hinweises auf die Patenterteilung: **02.04.2008**
(21) Anmeldenummer: 06010293.6
(22) Anmeldetag: 18.05.2006
(51) Int. Cl.: B60R 21/239, B60R 21/276, F16K 31/02, H01L 41/09

(54) **Gassackmodul**
Airbag module
Module de sac gonflable

(30) Priorität: 07.06.2005 DE 202005008937 U
(43) Veröffentlichungstag der Anmeldung: 13.12.2006
(73) Patentinhaber: TRW Automotive Safety Systems GmbH, 63743 Aschaffenburg (DE)
(72) Erfinder: Britz, Thomas, 63856 Bessenbach (DE)
(74) Vertreter: Sulzbach, Werner

(56) Entgegenhaltungen:
- DE-U1-0202005 001 00
- US-B1- 6 376 971
- US-B2- 6 547 274

## Beschreibung

Die Erfindung betrifft ein Gassackmodul für eine Fahrzeuginsassen-Rückhaltevorrichtung, mit einem Gassack und einer Abströmeinrichtung zur Freigabe und/oder Veränderung einer Abströmöffnung, durch die Gas aus dem Gassack entweichen kann.

Ein Gassackmodul, bei dem ein Abströmbereich in der Gassackwand geöffnet werden kann, wenn eine Verringerung des Gassackinnendrucks erwünscht ist, ist z.B. aus der WO-A-2004/045919 bekannt. Eine pyrotechnische Ladung in Form einer Sprengschnur ist direkt auf dem Abströmbereich angebracht, so daß der Abströmbereich nach Zündung der Sprengschnur durchbrennt oder mechanisch aufgerissen wird.

Bei dem in der WO-A-03/097407 gezeigten Gassackmodul ist ein Sprengbolzen vorgesehen, um einen schlauchförmigen Abströmbereich des Gassacks freizugeben.

In der EP-A-1 279 574 ist ein Gassackmodul gezeigt, bei dem zur Freigabe von Abströmöffnungen in einem Halteteil ein Schieber so bewegt wird, daß darin gebildete Bohrungen mit den Abströmöffnungen fluchten. Das in den Gassack einströmende heiße Gas schmilzt den zwischen den Bohrungen des Schiebers und den Abströmöffnungen im Halteteil befindlichen Bereich des Gassacks, so daß ein Teil des Gases beim Befüllen aus dem Gassack austritt.

Aus der gattungsbildenden US 6 547 274 B ist ein Gassackmodul bekannt, bei dem der Öffnungsquerschnitt einer Abströmöffnung in einem Trägerblech mittels piezoelektrisch gesteuerter Klappen freigegeben werden kann. Die Stromzufuhr der piezoelektrischen Elemente wird z.B. abhängig von der Haltung oder dem Körperbau des Fahrzeuginsassen oder der Fahrzeuggeschwindigkeit gesteuert.

Die DE 20 2005 001 000 U1 beschreibt ein Gedächtnismetall, das z.B. in eine Gassackwandung eingewebt wird. Beim Erwärmen der Metalldrähte verformen sich diese und nehmen die vorher eingeprägte Ausgangsform an. Dabei wird eine Abströmöffnung freigegeben und/oder vergrößert.

Ein Polymeraktor ist aus der US 6 376 971 B1 bekannt.

Die Erfindung schafft ein Gassackmodul, das ohne Vergrößerung des Bauraums eine für den Fahrzeuginsassen gefahrlose Steuerung des Abströmverhaltens ermöglicht.

Gemäß der Erfindung ist bei einem Gassackmodul der eingangs genannten Art vorgesehen, daß die Abströmeinrichtung wenigstens ein Element aus einem elektrisch ansteuerbaren Polymeraktor aufweist. Als Polymeraktoren werden elektrochemo-mechanische Aktoren bezeichnet, die eine aktive Schicht aus Polymeren enthalten, die ihr Volumen in Abhängigkeit eines elektrischen Feldes oder elektrochemischen Potentials ändern. Neben dieser aktiven Schicht umfassen die Polymeraktoren im wesentlichen eine passive Trägerschicht, die einen sandwichartigen Verbund mit der aktiven Schicht bildet, so daß sich der Verbund bei Spannungsänderung ähnlich einem Bimetallstreifen bei Temperaturvariation verbiegt. Als Elektrode zur Initiierung der zur Volumenänderung führenden elektrochemischen Prozesse in der aktiven Schicht kann eine mit der aktiven Schicht direkt in Verbindung stehende Metallschicht dienen.

Die Erfindung macht sich zunutze, daß die Polymeraktoren bereits mit Spannungsänderungen von wenigen Volt betrieben werden können und große Auslenkungen erzielen. Mit den Polymeraktoren ist es daher möglich, das Abströmverhalten eines Gassackmoduls gezielt zu beeinflussen. Genauer gesagt wird das erfindungsgemäß vorgesehene Element mit dem Polymeraktor zur Steuerung des effektiven Querschnitts der Abströmöffnung genutzt, d.h. das Element sorgt für die Erzeugung einer Abströmöffnung und/oder eine Veränderung des Abströmquerschnitts. Durch den Einsatz eines solchen Elements kann auf aufwendige und groß bauende Öffnungsmechanismen verzichtet werden. Die erfindungsgemäße Abströmeinrichtung hat zudem den Vorteil, daß weder Explosivstoffe oder dergleichen noch ein Schmelzen von Gassackgewebe für die Freigabe einer Abströmöffnung erforderlich sind, d.h. eine Ablösung von Partikeln ist ausgeschlossen.

Grundsätzlich ist die mittels der erfindungsgemäßen Abströmeinrichtung gesteuerte Abströmöffnung am Gassack vorgesehen.

Ferner ist der Polymeraktor in die Gassackwand integriert, insbesondere in das Gewebe der Gassackwand eingewebt, oder durch Aufnähen oder Aufkleben mit dem Gassackgewebe verbunden. Besonders bevorzugt kann das elektrochemisch inerte Gewebematerial als Trägerschicht für die aktive Schicht des Polymeraktors dienen. Bei Anlegen einer Spannung an den Polymeraktor kommt es dann zu einer Verformung des Gassackgewebes, wodurch ein Abströmbereich in der Gassackwand erzeugt, vergrößert oder verkleinert werden kann.

Insbesondere kann in der Abströmöffnung eine Sollbruchstelle vorgesehen sein, beispielsweise durch die Existenz von Aufreißkanten oder durch eine Veränderung der Struktur oder Dicke des Gassackgewebes, auf die der Polymeraktor einwirkt.

Alternativ kann der Polymeraktor auch Teil einer Abdeckung sein, die über einer in der Gassackwand gebildeten Abströmöffnung angeordnet ist.

Bei einer Anordnung des Polymeraktors an einer schwenkbaren Klappe kann ein Scharniermechanismus zur Steuerung der Klappe hergestellt werden.

Schließlich kann der Polymeraktor auch mit einer Silikonmembran zusammenwirken, die in das Gassackgewebe oder die Abdeckung integriert sein kann, und die durch die Aktivierung des Polymeraktors aufreißt und so die Abströmöffnung freigibt.

Vorteilhafte Ausgestaltungen der Erfindung sind in den Unteransprüchen angegeben.

Weitere Merkmale und Vorteile der Erfindung ergeben sich aus der nachfolgenden Beschreibung beispielhafter Ausführungsformen unter Bezugnahme auf die beigefügte Zeichnung. In der Zeichnung zeigen:
- Figur 1 eine schematische Darstellung des erfindungsgemäßen Gassackmoduls im Belastungsfall; und
- Figur 2 eine Ausführungsform der Abströmeinrichtung.

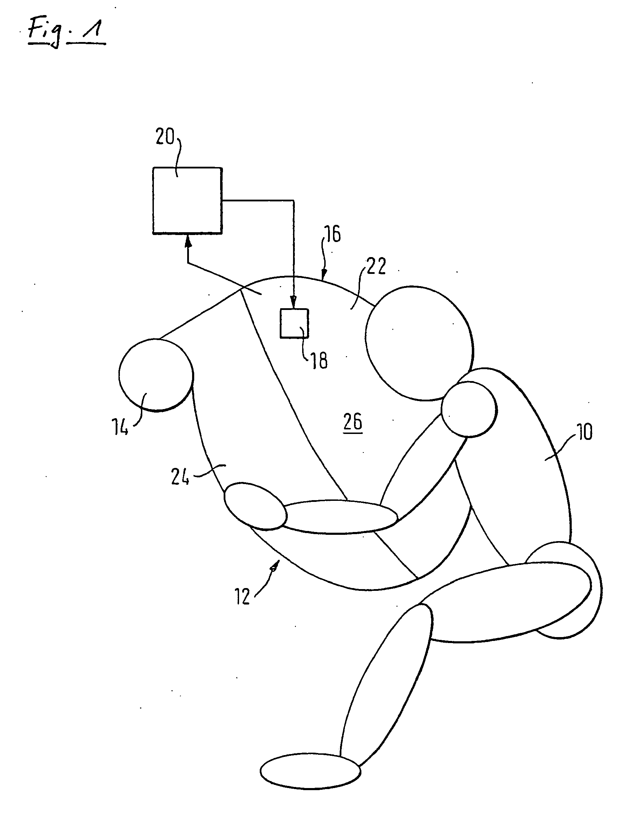

In Fig. 1 ist ein Fahrzeuginsasse 10 dargestellt, der in einen aufgeblasenen Gassack 12 eines Fahrzeuginsassen-Rückhaltesystems eintaucht. Der Gassack 12, der sich aus dem Gehäuse eines Gassackmoduls 14 heraus entfaltet hat, hat eine Gassackwand 16, an der eine elektrisch ansteuerbare Abströmeinrichtung 18 angeordnet ist. Die Abströmeinrichtung 18 dient zur selektiven Bereitstellung einer Abströmöffnung, durch die Gas aus dem Gassack 12 entweichen kann, d.h. die Abströmeinrichtung 18 sorgt für die Erzeugung einer Abströmöffnung und/oder eine Veränderung des Abströmquerschnitts. Die Abströmeinrichtung 18 umfaßt einen Polymeraktor (nicht dargestellt), der direkt oder indirekt mit einer elektronischen Steuerung 20 verbunden ist, d.h. der Polymeraktor ist durch die elektronische Steuerung 20 aktivierbar.

Der Polymeraktor umfaßt vorzugsweise eine passive Trägerschicht sowie eine aktive Schicht aus einem Polymer, das bei Anlegen eines elektrischen Feldes oder elektrochemischen Potentials, üblicherweise im Spannungsbereich von -3V bis +3 V, sein Volumen ändert. Zur Kontaktierung bzw. als Elektrode dient eine Metallschicht, die auf die aktive Schicht oder die Trägerschicht aufgedampft sein kann. Durch die Volumenänderung in der aktiven Schicht infolge der Spannungsvariation verbiegt sich der sandwichartige Verbund aus der aktiven Schicht und der passiven Trägerschicht ähnlich einem Bimetallstreifen bei Temperaturvariation. Das Polymer der aktiven Schicht kann insbesondere aus der Gruppe der elektrostriktiven Polymere, Polymergele, Kohlenstoff-Nanoröhrchen, leitfähigen konjungierten Polymere und ionenleitenden Polymere ausgewählt sein. Bevorzugt sind ionenleitende Polymere oder Polymergele, die gleichzeitig als Festelektrolyt dienen und somit ohne weitere bauliche Maßnahmen unter Umgebungsbedingungen eingesetzt werden können.

Bei einer besonders bevorzugten Ausführungsform dient ein Teil der Gassackwandung im Bereich der Abströmeinrichtung 18 als passive Trägerschicht des Polymeraktors, d.h. der Polymeraktor ist in die Gassackwandung bzw. das Gassackgewebe integriert. In diesem Fall ist eine besonders kompakte Bauweise der Abströmeinrichtung möglich.

Im Belastungsfall, wenn ein Abströmen von Gas aus dem Gassack 12 des Fahrzeuginsassen-Rückhaltesystems gewünscht ist, kann der Polymeraktor der Abströmeinrichtung 18 durch das Anlegen einer elektrischen Spannung mechanisch verformt werden. Diese mechanische Verformung des Polymeraktors bewirkt das Zerreißen des Gassackgewebes im Bereich der Abströmeinrichtung 18 und somit die Freigabe einer Abströmöffnung. Das elektrische Signal, das an den Polymeraktor angelegt wird, kann dabei ein reines Steuersignal sein, das nur die Freigabe der Abströmöffnung, beispielsweise nach Verstreichen einer bestimmten Zeitspanne seit der Aktivierung des Gassackmoduls, herbeiführt. Es kann sich aber auch um ein Regelsignal handeln, wenn die Abströmöffnung nur in bestimmten Belastungsfällen freigegeben werden soll. So kann die elektronische Steuerung 20 auch die Daten bestimmter Sensoren auswerten, die beispielsweise den Innendruck im Luftsack messen oder das Gewicht des Fahrzeuginsassen bestimmen, und dann in Abhängigkeit des jeweiligen Belastungsfalls entscheiden, ob die Abströmöffnung freigegeben wird.

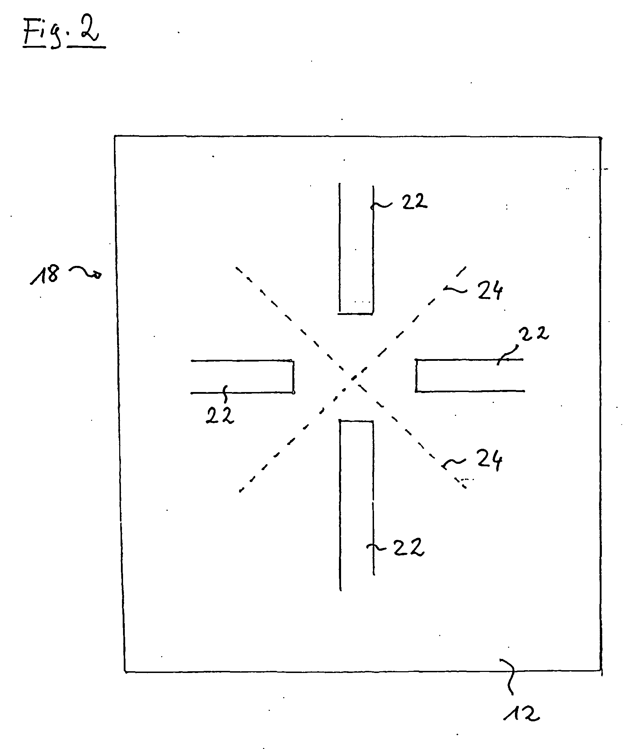

In Figur 2 ist eine bevorzugte Ausführungsform der Abströmeinrichtung 18 gezeigt, die mit Hilfe von Polymeraktoren 22 geöffnet werden kann. Das Gewebe des Gassacks 12 ist durch zwei sich schneidende und aufeinander senkrecht stehende Aufreißkanten 24 als Sollbruchstelle bereits vorgeschädigt, um die Bildung der Abströmöffnung zu erleichtern. In jedem der vier durch die Aufreißkanten 24 gebildeten Sektoren befinden sich jeweils ein Polymeraktor 22 auf der Außenseite des Gassackgewebes, wobei die passive Schicht des Polymeraktors 22 mit dem Gassackgewebe verbunden, beispielsweise aufgeklebt, ist und die aktive Schicht des Polymeraktors 22 darüber liegt. Bei der Aktivierung des Gassacks können gegebenenfalls auch die Polymeraktoren 22 mit Hilfe der elektronischen Steuerung (nicht gezeigt) aktiviert werden. Die aktive Schicht verringert dabei ihr Volumen und der Polymeraktor 22 übt auf das Gewebe des Gassacks 12 eine Kraft aus, die zum Aufreißen des Gewebes an den vorgeschädigten Stellen führt. Das Gewebe klappt dann nach außen, wobei der erhöhte Innendruck im Gassack die Bildung der Abströmöffnung unterstützt. Anstelle des Gassackgewebes kann im Bereich der Abströmeinrichtung 18 auch eine Silikonmembran vorhanden sein, mit welcher der Polymeraktor 22 verbunden ist und die bei einer Aktivierung des Polymeraktors aufreißt.

Der Polymeraktor kann ferner an einer der Abströmöffnung zugeordneten schwenkbaren Klappe angeordnet sein, wobei die Klappe am Gassack gebildet ist.

Schließlich ist es möglich, mit Hilfe der Polymeraktoren gemäß der vorliegenden Erfindung eine beispielsweise im Gehäuse 14 des Gassackmoduls bereits vorhandene Abströmöffnung in Anpassung an den jeweiligen Belastungsfall zu öffnen, zu schließen oder auch nur den Abströmquerschnitt zu verändern.

## Patentansprüche

1. Gassackmodul für eine Fahrzeuginsassen-Rückhaltevorrichtung, mit einem Gassack (12) und einer Abströmeinrichtung (18) zur Freigabe und/oder Veränderung einer Abströmöffnung, durch die Gas aus dem Gassack (12) entweichen kann,
**dadurch gekennzeichnet, daß**
die Abströmeinrichtung (18) wenigstens ein Element aus einem elektrisch aktivierbaren Polymeraktor (22) aufweist und in einem Wandungsteil des Gassacks (12) vorgesehen ist,
wobei der Polymeraktor (22) in den Wandungsteil mit der Abströmöffnung integriert ist und eine Trägerschicht und eine aktive Schicht aus einem Polymer umfaßt, und
wobei das Polymer bei Spannungsvariation sein Volumen ändert und ein aus der Gruppe der elektrostriktiven Polymere, Polymergele, Kohlenstoff-Nanoröhrchen, leitfähigen konjugierten Polymere und ionenleitenden Polymere ausgewählt ist.

2. Gassackmodul nach Anspruch 1, **dadurch gekennzeichnet, daß** der Polymeraktor Teil einer Abdeckung ist, die über der in dem Wandungsteil gebildeten Abströmöffnung angeordnet ist.

3. Gassackmodul nach Anspruch 1 oder 2, **dadurch gekennzeichnet, daß** die Abströmöffnung eine Sollbruchstelle (24) umfaßt, auf die der Polymeraktor (22) einwirkt.

4. Gassackmodul nach einem der Ansprüche 1 bis 3, **dadurch gekennzeichnet, daß** der Polymeraktor an einer der Abströmöffung zugeordneten schwenkbaren Klappe angeordnet ist.

5. Gassackmodul nach einem der Ansprüche 1 bis 3, **dadurch gekennzeichnet, daß** der Polymeraktor (22) mit einer Silikonmembran zusammenwirkt, die bei einer Aktivierung des Polymeraktors aufreißt.

6. Gassackmodul nach einem der vorhergehenden Ansprüche, **dadurch gekennzeichnet, daß** die Trägerschicht Teil eines Wandungsteils des Gassacks (12) im Bereich der Abströmeinrichtung (18) ist.

## Claims

1. A gas bag module for a vehicle occupant restraint device, comprising a gas bag (12) and a discharge arrangement (18) to expose and/or alter a discharge opening through which gas can escape from the gas bag (12),
**characterized in that**
the discharge arrangement (18) has at least one element made of an electrically activatable polymer actuator (22) and is provided in a wall part of the gas bag (12),
the polymer actuator (22) being integrated in the wall part with the discharge opening and including a carrier layer and an active layer made of a polymer, and
the polymer changing its volume upon a variation in voltage and being selected from the group of electrostrictive polymers, polymer gels, carbon nanotubes, conductive conjugate polymers and ion-conducting polymers.

2. The gas bag module according to claim 1, **characterized in that** the polymer actuator is part of a covering which is arranged over the discharge opening formed in the wall part.

3. The gas bag module according to claim 1 or 2, **characterized in that** the discharge opening has a predetermined breaking point (24) on which the polymer actuator (22) acts.

4. The gas bag module according to any of claims 1 to 3, **characterized in that** the polymer actuator is arranged on a pivotable flap associated with the discharge opening.

5. The gas bag module according to any of claims 1 to 3, **characterized in that** the polymer actuator (22) cooperates with a silicone membrane which tears open upon an activation of the polymer actuator.

6. The gas bag module according to any of the preceding claims, **characterized in that** the carrier layer is part of a wall part of the gas bag (12) in the region of the discharge arrangement (18).

## Revendications

1. Module de coussin à gaz pour un dispositif de retenue de passager de véhicule, comportant un coussin à gaz (12) et un système d'échappement (18) pour libérer et/ou modifier un orifice d'échappement à travers lequel du gaz peut s'échapper hors du coussin à gaz (12),
**caractérisé en ce que**
le système d'échappement (18) présente au moins un élément constitué par un actionneur en polymère (22) électriquement activable et est prévu dans une partie de paroi du coussin à gaz (12),
l'actionneur en polymère (22) étant intégré dans la partie de paroi avec l'orifice d'échappement et comprenant une couche support et une couche active en un polymère, et
le polymère changeant de volume en cas de variations de tension et étant choisi parmi le groupe des polymères électrostrictifs, des gels de polymère, des nanotubes en carbone, des polymères conjugués conducteurs et des polymères conducteurs d'ions.

2. Module de coussin à gaz selon la revendication 1, **caractérisé en ce que** l'actionneur en polymère fait partie d'un recouvrement qui est agencé au-dessus de l'orifice d'échappement formé dans la partie de paroi.

3. Module de coussin à gaz selon la revendication 1 ou 2, **caractérisé en ce que** l'orifice d'échappement comprend un point destiné à la rupture (24) sur lequel agit l'actionneur en polymère (22).

4. Module de coussin à gaz selon l'une des revendications 1 à 3, **caractérisé en ce que** l'actionneur en polymère est agencé sur un volet pivotant associé à l'orifice d'échappement.

5. Module de coussin à gaz selon l'une des revendications 1 à 3, **caractérisé en ce que** l'actionneur en polymère (22) coopère avec une membrane de silicone qui se déchire lors d'une activation de l'actionneur en polymère.

6. Module de coussin à gaz selon l'une des revendications précédentes, **caractérisé en ce que** la couche support fait partie d'une partie de paroi du coussin à gaz (12) dans la zone du système d'échappement (18).
